# EUROPÄISCHE PATENTSCHRIFT

(11) **EP 4 532 280 B1**
(45) Veröffentlichungstag und Bekanntmachung des Hinweises auf die Patenterteilung: **18.02.2026**
(21) Anmeldenummer: 23729034.1
(22) Anmeldetag: 22.05.2023
(51) Int. Cl.: B60T 13/74

(54) **PRIMÄRKOLBEN FÜR EINEN HAUPTBREMSZYLINDER ODER EINE GETRIEBEVORRICHTUNG**
PRIMARY PISTON FOR A BRAKE MASTER CYLINDER OR TRANSMISSION DEVICE
PISTON PRIMAIRE POUR MAITRE-CYLINDRE DE FREIN OU DISPOSITIF DE TRANSMISSION

(30) Priorität: 30.05.2022 DE 102022205422
(43) Veröffentlichungstag der Anmeldung: 09.04.2025
(73) Patentinhaber: Robert Bosch GmbH, 70442 Stuttgart (DE)
(72) Erfinder: VOLLERT, Herbert, 71665 Vaihingen/Enz (DE); NAGEL, Willi, 71686 Remseck/Hochdorf (DE); OSSES, Michael, 74081 Heilbronn (DE)
(86) Internationale Anmeldenummer: PCT/EP2023/063604
(87) Internationale Veröffentlichungsnummer: WO 2023/232529

(56) Entgegenhaltungen:
- DE-A1- 102012 202 645
- DE-A1- 102013 217 954
- DE-A1- 102016 203 563
- DE-A1- 102017 203 559

## Beschreibung

Die vorliegende Erfindung betrifft einen Primärkolben für einen Hauptbremszylinder oder eine Getriebevorrichtung. Ebenso betrifft die Erfindung einen Hauptbremszylinder für ein Brake-by-Wire-Bremssystem, eine Getriebevorrichtung für ein Brake-by-Wire-Bremssystem und einen Bremsdruckerzeuger für ein Brake-by-Wire-Bremssystem.

### Stand der Technik

Aus dem Stand der Technik, wie beispielsweise der DE 10 2017 203 559 A1, ist ein Primärkolben für einen Hauptbremszylinder bekannt, welcher mit einem dem Hauptbremszylinder vorgelagerten elektromechanischen Bremskraftverstärker zusammenwirken kann. Auf seiner ersten Seite ist der Primärkolben mittels einer in eine Vertiefung des Primärkolbens hineinragenden Primärfeder abgestützt, während mittels einer Spindel und Mutter des elektromechanischen Bremskraftverstärkers eine Kraft auf eine von der ersten Seite weg gerichtete zweite Seite des Primärkolbens übertragbar sein soll.

### Offenbarung der Erfindung

Die vorliegende Erfindung schafft einen Primärkolben für einen Hauptbremszylinder oder eine Getriebevorrichtung mit den Merkmalen des Anspruchs 1, einen Hauptbremszylinder für ein Brake-by-Wire-Bremssystem mit den Merkmalen des Anspruchs 5, eine Getriebevorrichtung für ein Brake-by-Wire-Bremssystem mit den Merkmalen des Anspruchs 7 und einen Bremsdruckerzeuger für ein Brake-by-Wire-Bremssystem mit den Merkmalen des Anspruchs 10.

### Vorteile der Erfindung

Die vorliegende Erfindung schafft einen Primärkolben, dessen vorteilhafte Form eine Verkürzung einer Baulänge eines mit dem Primärkolben ausgestatteten und die Funktionen eines Hauptbremszylinders und einer Getriebevorrichtung vereinenden Bremsdruckerzeugers ermöglicht. Da zumindest der zu dem Primärkolben ausgerichtete Teilabschnitt der Spindel des Bremsdruckerzeugers und gleichzeitig zumindest der zu dem Bremskolben ausgerichtete Teilabschnitt der Mutter des Bremsdruckerzeugers in die zweite Vertiefung des Primärkolbens einbringbar und/oder eingebracht sind, ist auch eine Kompaktheit des mit dem erfindungsgemäßen Primärkolben ausgestatteten Bremsdruckerzeugers gesteigert. Durch die mittels der vorliegenden Erfindung bewirkte Reduzierung der Baulänge des Bremsdruckerzeugers, bzw. der erhöhten Kompaktheit seiner Bauweise, kann Bauraum an einem damit ausgebildeten Fahrzeug/Kraftfahrzeug eingespart werden.

Bei einer vorteilhaften Ausführungsform des Primärkolbens ist zumindest der zu dem Primärkolben ausgerichtete Teilabschnitt der Spindel in der zweiten Vertiefung befestigbar oder befestigt, während gleichzeitig zumindest der zu dem Primärkolben ausgerichtete Teilabschnitt der in eine Rotationsbewegung um die Spindel versetzten Mutter in die zweite Vertiefung einbringbar ist. Somit kann ein in dem Primärkolben geschaffener Bauraum für die damit zusammenwirkende Spindel mit Mutter genutzt werden.

Bei einer weiteren vorteilhaften Ausführungsform des Primärkolbens ist zumindest der zu dem Primärkolben ausgerichtete Teilabschnitt der Mutter in der zweiten Vertiefung befestigbar oder befestigt, während gleichzeitig zumindest der zu dem Primärkolben ausgerichtete Teilabschnitt der in eine Rotationsbewegung versetzten Spindel in die zweite Vertiefung einbringbar ist. Wie anhand der nachfolgenden Beschreibung deutlich wird, kann bei der hier beschriebenen Ausführungsform des Primärkolbens die damit zusammenwirkende Mutter (nahezu) vollständig in der zweiten Vertiefung "versenkt" werden, was eine signifikante Reduzierung der Baulänge des damit ausgestatteten Bremsdruckerzeugers bewirkt.

Sofern zumindest der zu dem Primärkolben ausgerichtete Teilabschnitt der Mutter in der zweiten Vertiefung befestigt ist, kann die Mutter eine Kugelumlaufmutter oder eine Gewindemutter sein. Somit können vorteilhafte Typen von Muttern zum Zusammenwirken mit dem erfindungsgemäßen Primärkolben eingesetzt werden.

Die vorausgehend beschriebenen Vorteile sind auch gewährleistet bei einem Hauptbremszylinder für ein Brake-by-Wire-Bremssystem mit einem derartigen Primärkolben und der mit dem Primärkolben zusammenwirkenden Primärfeder, wobei zumindest der zu dem Primärkolben ausgerichtete Teilabschnitt der Primärfeder in der ersten Vertiefung des Primärkolbens befestigt ist.

Vorzugsweise ist ein Gehäuse des Hauptbremszylinders ein Kokillenguss. Das Gehäuse des Hauptbremszylinders kann in diesem Fall vergleichsweise kostengünstig hergestellt werden.

Die oben beschriebenen Vorteile sind auch realisiert bei einer Getriebevorrichtung für ein Brake-by-Wire-Bremssystem mit einem entsprechenden Primärkolben, der Spindel und der an der Spindel angeordneten Mutter, welche mit dem Primärkolben zusammenwirken, wobei zumindest der zu dem Primärkolben ausgerichtete Teilabschnitt der Spindel oder zumindest der zu dem Primärkolben ausgerichtete Teilabschnitt der Mutter in der zweiten Vertiefung des Primärkolbens befestigt ist.

Als vorteilhafte Weiterbildung kann, sofern zumindest der zu dem Primärkolben ausgerichtete Teilabschnitt der Spindel in der zweiten Vertiefung des Primärkolbens befestigt ist, an dem Primärkolben mindestens eine Drehmomentabstützkomponente befestigt oder ausgebildet sein, mittels welcher der Primärkolben an einer Innenwand eines Getriebegehäuses der Getriebevorrichtung abgestützt ist. Alternativ kann, sofern zumindest der zu dem Primärkolben ausgerichtete Teilabschnitt der Mutter in der zweiten Vertiefung des Primärkolbens befestigt ist, an der Mutter mindestens eine Drehmomentabstützkomponente befestigt oder ausgebildet sein, mittels welcher die Mutter an der Innenwand des Getriebegehäuses der Getriebevorrichtung abgestützt ist. beiden Fällen kann mittels der mindestens einen Drehmomentabstützkomponente eine unerwünschte Mitrotierbewegung des Primärkolbens unterbunden werden.

Des Weiteren weist auch ein Bremsdruckerzeuger für ein Brake-by-Wire-Bremssystem die oben erläuterten Vorteile auf, welcher ausgestattet ist mit einem derartigen Primärkolben, dem mit dem Primärkolben zusammenwirkenden Hauptbremszylinder und seiner Primärfeder, wobei zumindest der zu dem Primärkolben ausgerichtete Teilabschnitt der Primärfeder in der ersten Vertiefung des Primärkolbens befestigt ist, und der mit dem Primärkolben zusammenwirkenden Getriebevorrichtung mit ihrer Spindel und ihrer an der Spindel angeordneten Mutter, wobei zumindest der zu dem Primärkolben ausgerichtete Teilabschnitt der Spindel oder zumindest der zu dem Primärkolben ausgerichtete Teilabschnitt der Mutter in der zweiten Vertiefung des Primärkolbens befestigt ist.

Bei einer vorteilhaften Ausführungsform des Bremsdruckerzeugers ist ein Gehäuse des Hauptbremszylinders ein Kokillenguss. Das Gehäuse des Hauptbremszylinders ist in diesem Fall kostengünstig herstellbar.

Alternativ oder ergänzend kann das Gehäuse des Hauptbremszylinders an dem Getriebegehäuse der Getriebevorrichtung festgeschraubt sein. Dies erleichtert eine Reparatur oder einen Austausch des Hauptbremszylinders.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Primärkolbens, bzw. des damit ausgestatteten Bremsdruckerzeugers; und
- Fig. 2: eine schematische Darstellung einer zweiten Ausführungsform des Primärkolbens, bzw. des damit ausgestatteten Bremsdruckerzeugers.

### Ausführungsformen der Erfindung

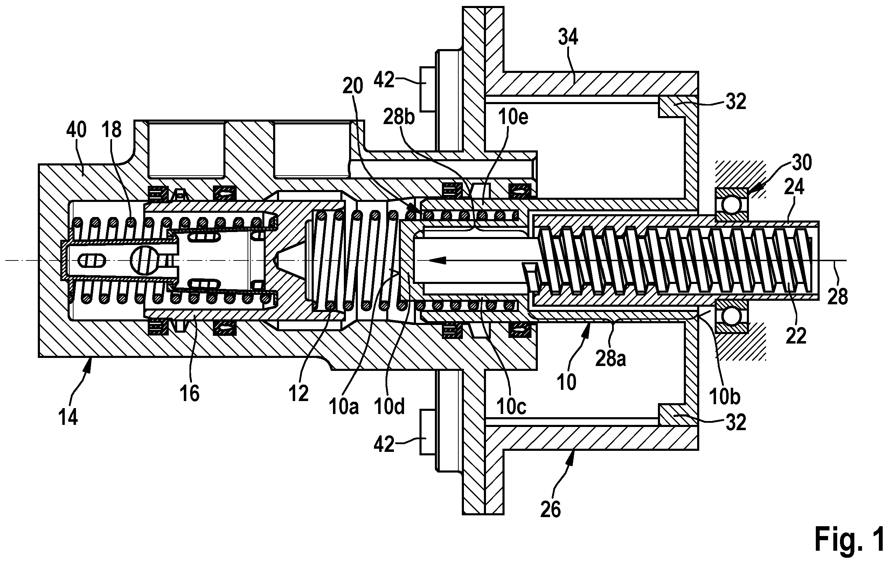

Fig. 1 zeigt eine schematische Darstellung einer ersten Ausführungsform des Primärkolbens, bzw. des damit ausgestatteten Bremsdruckerzeugers.

Der in Fig. 1 schematisch dargestellte Primärkolben 10 ist auf einer ersten Seite 10a derart geformt, dass eine Primärfeder 12 eines mit dem Primärkolben 10 ausgestatteten oder zusammenwirkenden Hauptbremszylinders 14 den Primärkolben 10 auf der ersten Seite 10a mechanisch kontaktieren kann/kontaktiert. Beispielhaft ist der Primärkolben 10 bei der Ausführungsform der Fig. 1 mittels der Primärfeder 12 von einem Sekundärkolben 16 des Hauptbremszylinders 14 abstützbar/abgestützt, wobei der Sekundärkolben 16 mittels einer Sekundärfeder 18 von einer Innenwand des Hauptbremszylinders 14 abstützbar/abgestützt ist. Alternativ kann der Primärkolben 10 jedoch auch mittels der Primärfeder 12 von einer Innenwand des Hauptbremszylinders 14 abstützbar/abgestützt sein. Auf der ersten Seite 10a des Primärkolbens 10 ist eine erste Vertiefung 20 ausgebildet, in welcher zumindest ein zu dem Primärkolben 10 ausgerichteter Teilabschnitt der Primärfeder 12 einbringbar/befestigt ist. Die erste Seite 10a des Primärkolbens 10 kann somit als eine gestufte Seite oder gestufte Innenkonturseite bezeichnet werden. Die erste Vertiefung 20 auf der ersten Seite 10a des Primärkolbens 10 ist vorzugsweise ringförmig ausgebildet. Ein Innendurchmesser der ringförmig ausgebildeten ersten Vertiefung 20 kann kleiner-gleich einem Innendurchmesser der Primärfeder 12 sein, während ein Außendurchmesser der ringförmig ausgebildeten ersten Vertiefung 20 vorzugsweise größer-gleich einem Außendurchmesser der Primärfeder ist.

Der Primärkolben 10 ist außerdem auf einer von der ersten Seite 10a weg gerichteten zweiten Seite 10b derart geformt, dass über eine Spindel 22 und eine an der Spindel 22 angeordnete Mutter 24 einer mit dem Primärkolben 10 ausgestatteten oder zusammenwirkenden Getriebevorrichtung 26 eine Kraft auf den Primärkolben 10 übertragbar ist/übertragen wird. Die Kraft kann beispielsweise von einem (nicht dargestellten) Motor auf die Spindel 22 und die damit zusammenwirkende Mutter 24 übertragen sein und dann über die Spindel 22 und die Mutter 24 auf den Primärkolben 10 weiter übertragen werden. Der Motor kann ein Motor der Getriebevorrichtung 26 oder ein extern an der Getriebevorrichtung 26 angebundener Motor sein. Die Spindel 22 und die Mutter 24 bilden zusammen eine Rotations- und Translations-Getriebestufe der Getriebevorrichtung 26. Die aus der Spindel 22 und der Mutter 24 gebildete Rotations- und Translations-Getriebestufe kann insbesondere die letzte Getriebestufe einer Kraftübertragungskette der Getriebevorrichtung 26 sein. Die Getriebevorrichtung 26 kann zumindest ein Teil eines elektromechanischen Bremskraftverstärkers sein.

Wie in Fig. 1 bildlich wiedergegeben, ist auf der zweiten Seite 10b des Primärkolbens 10 eine zweite Vertiefung 28 ausgebildet, in welcher zumindest ein zu dem Primärkolben 10 ausgerichteter Teilabschnitt der Spindel 22 und gleichzeitig zumindest ein zu dem Primärkolben 10 ausgerichteter Teilabschnitt der Mutter 24 einbringbar und/oder befestigt sind. Auch die zweite Seite 10b des Primärkolbens 10 ist darum als eine gestufte Seite oder gestufte Innenkonturseite des Primärkolbens 10 umschreibbar. Die zweite Vertiefung 28 ist derart großvolumig ausgebildet, dass die auf der ersten Seite 10a des Primärkolbens 10 ausgebildete erste Vertiefung 20 zumindest einen zu der ersten Seite 10a ausgerichteten Teilabschnitt der zweiten Vertiefung 28 umrahmt. Man kann dies auch damit umschreiben, dass sich die zweite Vertiefung 28 des Primärkolbens 10 ausgehend von der zweiten Seite 10b bis in ein von der ersten Vertiefung 20 umrahmtes Kolbenteilvolumen 10c des Primärkolbens 10 erstreckt. Mittels eines auf der ersten Seite 10a des Primärkolbens 10 ausgebildeten Deckelabschnitts/Kolbenbodens 10d des Kolbenteilvolumens 10c kann ein Eindringen von Bremsflüssigkeit aus dem Hauptbremszylinder 14 in die zweite Vertiefung 28 des Primärkolbens 10 verhindert sein. Vorzugsweise erstreckt sich die zweite Vertiefung 28 des Primärkolbens 10 ausgehend von seiner zweiten Seite 10b derart weit in den Primärkolben 10, dass der zu der ersten Seite 10a des Primärkolbens 10 ausgerichtete Teilabschnitt der zweiten Vertiefung 28 lediglich mittels des Deckelabschnitts 10d von der ersten Seite 10a des Primärkolbens 10 getrennt ist. Eine Dicke des Deckelabschnitts 10d entlang einer maximalen Ausdehnung des Primärkolbens 10 kann beispielsweise kleiner-gleich einem Zehntel der maximalen Ausdehnung des Primärkolbens 10, insbesondere kleiner-gleich einem Fünfzehntel der maximalen Ausdehnung des Primärkolbens 10, sein.

Durch die mittels der Form des Primärkolbens 10 geschaffene Möglichkeit eines Eintauchens zumindest des zu dem Primärkolben 10 ausgerichteten Teilabschnitts der Spindel 22 und zumindest des zu dem Primärkolben 10 ausgerichteten Teilabschnitts der Mutter 24 kann ein Bauraum des Primärkolbens 10 für zumindest die Teilabschnitte von Spindel 22 und Mutter 24 mitgenutzt werden. Wie in Fig. 1 erkennbar ist, kann deshalb mittels der vorausgehend beschriebenen vorteilhaften Form des Primärkolbens 10 eine Bauraumlänge des die Funktionen des Bremskraftverstärkers 14 und der Getriebevorrichtung 26 aufweisenden Bremsdruckerzeugers deutlich reduziert werden.

Optionaler Weise kann an der ersten Seite 10a des Primärkolbens 10 noch ein Randbereich 10e ausgebildet sein, welcher die erste Vertiefung 20 des Primärkolbens 10 umrahmt. Die zweite Vertiefung 28 auf der zweiten Seite 10b des Primärkolbens 10 kann einen an der zweiten Seite 10b angrenzenden Außenabschnitt 28a und einen auf einer von der zweiten Seite 10b weg gerichteten Seite des Außenabschnitts 28a liegenden Innenabschnitt 28b umfassen. Der Innenabschnitt 28b der zweiten Vertiefung 28 kann sich bis in das von der ersten Vertiefung 20 umrahmte Kolbenteilvolumen 10c erstrecken. Vorzugsweise ist ein maximaler Durchmesser des Innenabschnitts 28b kleiner als ein minimaler Durchmesser des Außenabschnitts 28a der zweiten Vertiefung 28. Dies erleichtert eine Ausbildung des Innenabschnitts 28b der zweiten Vertiefung 28 auch innerhalb des von der ersten Vertiefung 20 umrahmten Kolbenteilvolumens 10c des Primärkolbens 10.

Bei der Ausführungsform der Fig. 1 ist zumindest der zu dem Primärkolben 10 ausgerichtete Teilabschnitt der Spindel 22 in der zweiten Vertiefung 28 befestigbar/befestigt. Dazu kann der maximale Durchmesser des Innenabschnitts 28b der zweiten Vertiefung 28 (nahezu) gleich einem maximalen Durchmesser des in dem Innenabschnitt 28b befestigten Teilabschnitts der Spindel 22 sein. Während die Spindel 22 an dem Primärkolben 10 fixiert ist, kann die Mutter 24 mittels eines Betriebs des Motors zu einer Rotationsbewegung um die Spindel 22 angeregt werden. Speziell ist bei der Ausführungsform der Fig. 1 die Mutter 24 über ein Lager 30 gelagert. Mittels der Rotationsbewegung der Mutter 24 werden die Spindel 22 und der daran befestigte Primärkolben linear verstellt, wobei die zweite Vertiefung 28/ihr Außenabschnitt 28a des verstellten Primärkolbens 10 den zu dem Primärkolben 10 ausgerichteten Teilabschnitt der rotierenden Mutter 24 aufnimmt oder freigibt. Vorzugsweise ist deshalb der minimale Durchmesser des Außenabschnitts 28a der zweiten Vertiefung 28 größer als ein maximaler Durchmesser des in den Außenabschnitt 28a einbringbaren Teilabschnitts der Mutter 24.

Als vorteilhafte Weiterbildung ist bei der Ausführungsform der Fig. 1 noch mindestens eine Drehmomentabstützkomponente 32 an dem Primärkolben 10 befestigt oder ausgebildet. Mittels der mindestens einen Drehmomentabstützkomponente 32 kann der Primärkolben 10 derart an einer Innenwand eines Getriebegehäuses 34 der Getriebevorrichtung 26 abgestützt sein, dass eine unerwünschte Mitrotierbewegung des Primärkolbens 10 zusammen mit der in ihre Rotationsbewegung versetzten Mutter 24 unterbunden ist.

Bezüglich weiterer Merkmale des Bremsdruckerzeugers der Fig. 1 und ihrer Vorteile wird auf die nachfolgende Beschreibung verwiesen.

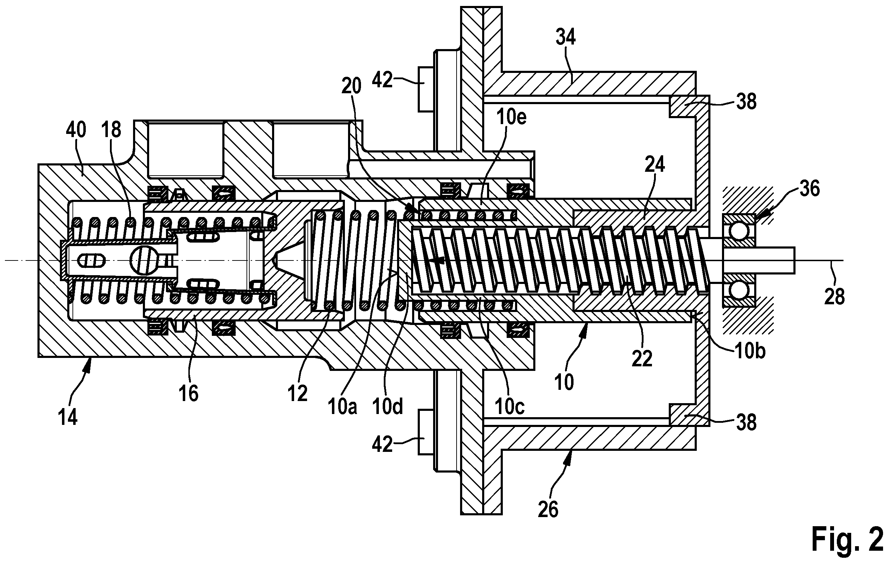

Fig. 2 zeigt eine schematische Darstellung einer zweiten Ausführungsform des Primärkolbens, bzw. des damit ausgestatteten Bremsdruckerzeugers.

Im Unterschied zu der zuvor beschriebenen Ausführungsform ist bei dem Primärkolben 10 der Fig. 2 zumindest der zu dem Primärkolben 10 ausgerichtete Teilabschnitt der Mutter 24 in der zweiten Vertiefung 28/ihrem Außenabschnitt 28a befestigbar/befestigt. Bevorzugter Weise ist dazu ein maximaler Durchmesser des Außenabschnitts 28a der zweiten Vertiefung 28 (im Wesentlichen) gleich einem maximalen Durchmesser des in der zweiten Vertiefung 28/ihrem Außenabschnitt 28a befestigten Teilabschnitts der Mutter 24. Während die Mutter 24 an dem Primärkolben 10 fixiert ist, kann die Spindel 22 in Bezug zu dem Primärkolben 10 mittels des Betriebs des Motors zu einer Rotationsbewegung um eine Längsachse der Spindel 22 angeregt werden. Zumindest der zu dem Primärkolben 10 ausgerichtete Teilabschnitt der in die Rotationsbewegung versetzten Spindel 22 dreht sich während der Rotationsbewegung in die zweite Vertiefung 28/ihren Innenabschnitt 28b hinein oder aus der zweiten Vertiefung 28/ihrem Innenabschnitt 28b heraus. Vorzugsweise ist deshalb ein minimaler Durchmesser des Innenabschnitts 28b der zweiten Vertiefung 28 größer als ein maximaler Durchmesser des in den Innenabschnitt 28b einbringbaren Teilabschnitts der Spindel 22. Zur Abstützung der Axialkraft kann die Spindel 22 über ein Lager 36 gelagert sein.

Wie anhand eines Vergleichs der Fig. 1 und 2 erkennbar ist, kann bei der Ausführungsform der Fig. 1 die Spindel 22 bis zu dem Deckelabschnitt 10d in die zweite Vertiefung 28 eintauchen. Ein maximaler Hub von Spindel 22 und Mutter 24 kann deshalb komplett im Bauraum des Primärkolbens 10 aufgenommen werden. Deshalb weist der Bremsdruckerzeuger der Fig. 2 eine kürzere Baulänge als die Ausführungsform der Fig. 1 auf. Bei dem Bremsdruckerzeuger der Fig. 2 ist die Kompaktheit seiner Bauweise somit weiter optimiert.

Als vorteilhafte Weiterbildung ist an der Mutter 24 des Bremsdruckerzeugers der Fig. 2 noch mindestens eine Drehmomentabstützkomponente 38 befestigt/ausgebildet, mittels welcher die Mutter 24 und damit auch der Primärkolben 10 an der Innenwand des Getriebegehäuses 34 der Getriebevorrichtung 26 abgestützt sind. Eine unerwünschte Mitrotierbewegung des Primärkolbens 10 zusammen mit der in ihre Rotationsbewegung versetzten Spindel 22 ist somit auch bei dem Bremsdruckerzeuger der Fig. 2 unterbunden.

Bezüglich weiterer Merkmale und Eigenschaften des Bremsdruckerzeugers der Fig. 2 wird auf die Beschreibung der Ausführungsform der Fig. 1 und die nachfolgenden Erläuterungen verwiesen.

Alle oben erläuterten Bremsdruckerzeuger können für ein Brake-by-Wire-Bremssystem, für eine Servo-Brake oder eine Power-Brake eingesetzt werden. Eine Verwendbarkeit der oben erläuterten Bremsdruckerzeuger ist jedoch nicht auf die hier aufgezählten Verwendungszwecke limitiert.

Bei jedem der oben beschriebenen Bremsdruckerzeuger kann seine Mutter 24 auch als eine Spindelmutter bezeichnet werden. Die Mutter 24 kann z.B. eine Kugelumlaufmutter oder eine Gewindemutter sein. Unter der Spindel 22 kann eine Gewindespindel, eine Kugelumlaufspindel oder eine Zahnstange verstanden werden.

Ein Gehäuse 40 des Hauptbremszylinders 14 kann mittels mindestens einer Schraube 42 an dem Getriebegehäuse 34 der Getriebevorrichtung 26 festgeschraubt sein/werden. Dies erleichtert eine Montage des Hauptbremszylinders 14 an der Getriebevorrichtung 26 und ermöglicht einen schnellen und leicht ausführbaren Austausch des Hauptbremszylinders 14 im Servicefall. Außerdem kann in diesem Fall der Hauptbremszylinder 14 als separate Baugruppe getrennt von der Getriebevorrichtung 26 hergestellt werden. Bevorzugter Weise ist das Gehäuse 40 des Hauptbremszylinders 14 ein Kokillenguss, wie insbesondere ein Kokillenguss aus Aluminium. Der Hauptbremszylinder 14 ist in diesem Fall relativ kostengünstig herstellbar.

Alle oben beschriebenen Bremsdruckerzeuger können zur Realisierung eines zweikreisigen Bremssystems verwendet werden. Es wird jedoch darauf hingewiesen, dass der Hauptbremszylinder 14 der oben erläuterten Bremsdruckerzeuger lediglich beispielhaft als Tandem-Hauptbremszylinder ausgebildet ist. Alternativ kann der Hauptbremszylinder 14 auch nur zur hydraulischen Anbindung eines einzigen Bremskreises ausgebildet sein.

Es wird nochmals darauf hingewiesen, dass alle oben erläuterten Bremsdruckerzeuger einen kompakten Aufbau aufweisen und kostengünstig herstellbar sind. Aufgrund der vorteilhaften Nutzung des Bauraums ihres Primärkolbens 10 muss ein unerwünschtes Hineinragen ihrer Spindel 22 in einen Fahrgastinnenraum des damit ausgestatteten Fahrzeugs nicht in Kauf genommen werden.

## Patentansprüche

1. Primärkolben (10) für einen Hauptbremszylinder (14) oder eine Getriebevorrichtung (26),
welcher auf einer ersten Seite (10a) eine erste Vertiefung (20) aufweist, in welche zumindest ein zu dem Primärkolben (10) ausgerichteter Teilabschnitt einer Primärfeder (12) eines mit dem Primärkolben (10) ausgestatteten oder zusammenwirkenden Hauptbremszylinders (14) einbringbar oder befestigt ist,
wobei
auf einer von der ersten Seite (10a) weg gerichteten zweiten Seite (10b) des Primärkolbens (10) eine zweite Vertiefung (28) ausgebildet ist, in welche zumindest ein zu dem Primärkolben (10) ausgerichteter Teilabschnitt einer Spindel (22) einer mit dem Primärkolben (10) ausgestatteten oder zusammenwirkenden Getriebevorrichtung (26) und gleichzeitig zumindest ein zu dem Primärkolben (10) ausgerichteter Teilabschnitt einer an der Spindel (22) angeordneten Mutter (24) der Getriebevorrichtung (26) einbringbar und/oder befestigt sind,
dadurch gekennzeichent dass
die auf der ersten Seite (10a) des Primärkolbens (10) ausgebildete erste Vertiefung (20) zumindest einen zu der ersten Seite (10a) ausgerichteten Teilabschnitt der zweiten Vertiefung (28) umrahmt.

2. Primärkolben (10) nach Anspruch 1, wobei zumindest der zu dem Primärkolben (10) ausgerichtete Teilabschnitt der Spindel (22) in der zweiten Vertiefung (28) befestigbar oder befestigt ist, während gleichzeitig zumindest der zu dem Primärkolben (10) ausgerichtete Teilabschnitt der in eine Rotationsbewegung um die Spindel (22) versetzten Mutter (24) in die zweite Vertiefung (28) einbringbar ist.

3. Primärkolben (10) nach Anspruch 1, wobei zumindest der zu dem Primärkolben (10) ausgerichtete Teilabschnitt der Mutter (24) in der zweiten Vertiefung (28) befestigbar oder befestigt ist, während gleichzeitig zumindest der zu dem Primärkolben (10) ausgerichtete Teilabschnitt der in eine Rotationsbewegung versetzten Spindel (22) in die zweite Vertiefung (28) einbringbar ist.

4. Primärkolben (10) nach Anspruch 3, wobei zumindest der zu dem Primärkolben (10) ausgerichtete Teilabschnitt der Mutter (24) in der zweiten Vertiefung (28) befestigt ist, und die Mutter (24) eine Kugelumlaufmutter oder eine Gewindemutter ist.

5. Hauptbremszylinder (14) für ein Brake-by-Wire-Bremssystem mit:
einem Primärkolben (10) nach einem der vorhergehenden Ansprüche, und
der mit dem Primärkolben (10) zusammenwirkenden Primärfeder (12),
wobei zumindest der zu dem Primärkolben (10) ausgerichtete Teilabschnitt der Primärfeder (12) in der ersten Vertiefung (20) des Primärkolbens (10) befestigt ist.

6. Hauptbremszylinder (14) nach Anspruch 5, wobei ein Gehäuse (40) des Hauptbremszylinders (14) ein Kokillenguss ist.

7. Getriebevorrichtung (26) für ein Brake-by-Wire-Bremssystem mit:
einem Primärkolben (10) nach einem der Ansprüche 1 bis 4, und
der Spindel (22) und der an der Spindel (22) angeordneten Mutter (24), welche mit dem Primärkolben (10) zusammenwirken,
wobei zumindest der zu dem Primärkolben (10) ausgerichtete Teilabschnitt der Spindel (22) oder zumindest der zu dem Primärkolben (10) ausgerichtete Teilabschnitt der Mutter (24) in der zweiten Vertiefung (28) des Primärkolbens (10) befestigt ist.

8. Getriebevorrichtung (26) nach Anspruch 7, wobei zumindest der zu dem Primärkolben (10) ausgerichtete Teilabschnitt der Spindel (22) in der zweiten Vertiefung (28) des Primärkolbens (10) befestigt ist, und wobei an dem Primärkolben (10) mindestens eine Drehmomentabstützkomponente (32) befestigt oder ausgebildet ist, mittels welcher der Primärkolben (10) an einer Innenwand eines Getriebegehäuses (34) der Getriebevorrichtung (26) abgestützt ist.

9. Getriebevorrichtung (26) nach Anspruch 7, wobei zumindest der zu dem Primärkolben (10) ausgerichtete Teilabschnitt der Mutter (24) in der zweiten Vertiefung (28) des Primärkolbens (10) befestigt ist, und wobei an der Mutter (24) mindestens eine Drehmomentabstützkomponente (38) befestigt oder ausgebildet ist, mittels welcher die Mutter (24) an der Innenwand des Getriebegehäuses (34) der Getriebevorrichtung (26) abgestützt ist.

10. Bremsdruckerzeuger für ein Brake-by-Wire-Bremssystem mit:
einem Primärkolben (10) nach einem der Ansprüche 1 bis 4,
dem mit dem Primärkolben (10) zusammenwirkenden Hauptbremszylinder (14) und seiner Primärfeder (12), wobei zumindest der zu dem Primärkolben (10) ausgerichtete Teilabschnitt der Primärfeder (12) in der ersten Vertiefung (20) des Primärkolbens (10) befestigt ist, und
der mit dem Primärkolben (10) zusammenwirkenden Getriebevorrichtung (26) mit ihrer Spindel (22) und ihrer an der Spindel (22) angeordneten Mutter (24), wobei zumindest der zu dem Primärkolben (10) ausgerichtete Teilabschnitt der Spindel (22) oder zumindest der zu dem Primärkolben (10) ausgerichtete Teilabschnitt der Mutter (24) in der zweiten Vertiefung (28) des Primärkolbens (10) befestigt ist.

11. Bremsdruckerzeuger nach Anspruch 10, wobei ein Gehäuse (40) des Hauptbremszylinders (14) ein Kokillenguss ist.

12. Bremsdruckerzeuger nach Anspruch 10 oder 11, wobei das Gehäuse (40) des Hauptbremszylinders (14) an dem Getriebegehäuse (34) der Getriebevorrichtung (26) festgeschraubt ist.

## Claims

1. Primary piston (10) for a master brake cylinder (14) or a transmission device (26),
which has on a first side (10a) a first depression (20) into which at least one sub-portion, oriented towards the primary piston (10), of a primary spring (12) of a master brake cylinder (14) equipped with or interacting with the primary piston (10) is able to be introduced or is fastened,
wherein, on a second side (10b), directed away from the first side (10a), of the primary piston (10), there is formed a second depression (28) into which at least one sub-portion, oriented towards the primary piston (10), of a spindle (22) of a transmission device (26) equipped with or interacting with the primary piston (10), and at the same time at least one sub-portion, oriented towards the primary piston (10), of a nut (24) of the transmission device (26) arranged on the spindle (22), is able to be introduced and/or is fastened, **characterized in that**
the first depression (20) formed on the first side (10a) of the primary piston (10) surrounds at least one sub-portion, oriented towards the first side (10a), of the second depression (28).

2. Primary piston (10) according to Claim 1, wherein at least that sub-portion of the spindle (22) which is oriented towards the primary piston (10) is able to be or is fastened in the second depression (28), while at the same time at least that sub-portion of the nut (24) which is oriented towards the primary piston (10), said nut being set in rotational motion around the spindle (22), is able to be introduced into the second depression (28).

3. Primary piston (10) according to Claim 1, wherein at least that sub-portion of the nut (24) which is oriented towards the primary piston (10) is able to be or is fastened in the second depression (28), while at the same time at least that sub-portion of the spindle (22) which is oriented towards the primary piston (10), said spindle being set in rotational motion, is able to be introduced into the second depression (28).

4. Primary piston (10) according to Claim 3, wherein at least that sub-portion of the nut (24) which is oriented towards the primary piston (10) is fastened in the second depression (28), and the nut (24) is a recirculating ball nut or a threaded nut.

5. Master brake cylinder (14) for a brake-by-wire brake system, having:
a primary piston (10) according to one of the preceding claims, and
the primary spring (12) that interacts with the primary piston (10),
wherein at least that sub-portion of the primary spring (12) which is oriented towards the primary piston (10) is fastened in the first depression (20) of the primary piston (10).

6. Master brake cylinder (14) according to Claim 5, wherein a housing (40) of the master brake cylinder (14) is a permanent mould casting.

7. Transmission device (26) for a brake-by-wire brake system, having:
a primary piston (10) according to one of Claims 1 to 4, and
the spindle (22) and the nut (24) arranged on the spindle (22) that interact with the primary piston (10),
wherein at least that sub-portion of the spindle (22) which is oriented towards the primary piston (10) or at least that sub-portion of the nut (24) which is oriented towards the primary piston (10) is fastened in the second depression (28) of the primary piston (10).

8. Transmission device (26) according to Claim 7, wherein at least that sub-portion of the spindle (22) which is oriented towards the primary piston (10) is fastened in the second depression (28) of the primary piston (10), and wherein at least one torque support component (32) is fastened to or formed on the primary piston (10), by means of which at least one torque support component the primary piston (10) is supported against an inner wall of a transmission housing (34) of the transmission device (26).

9. Transmission device (26) according to Claim 7, wherein at least that sub-portion of the nut (24) which is oriented towards the primary piston (10) is fastened in the second depression (28) of the primary piston (10), and wherein at least one torque support component (38) is fastened to or formed on the nut (24), by means of which at least one torque support component the nut (24) is supported against the inner wall of the transmission housing (34) of the transmission device (26).

10. Brake pressure generator for a brake-by-wire brake system, having:
a primary piston (10) according to one of Claims 1 to 4,
the master brake cylinder (14) interacting with the primary piston (10) and its primary spring (12), wherein at least that sub-portion of the primary spring (12) which is oriented towards the primary piston (10) is fastened in the first depression (20) of the primary piston (10), and
the transmission device (26) interacting with the primary piston (10), with its spindle (22) and its nut (24) arranged on the spindle (22), wherein at least that sub-portion of the spindle (22) which is oriented towards the primary piston (10) or at least that sub-portion of the nut (24) which is oriented towards the primary piston (10) is fastened in the second depression (28) of the primary piston (10).

11. Brake pressure generator according to Claim 10, wherein a housing (40) of the master brake cylinder (14) is a permanent mould casting.

12. Brake pressure generator according to Claim 10 or 11, wherein the housing (40) of the master brake cylinder (14) is fixedly screwed to the transmission housing (34) of the transmission device (26).

## Revendications

1. Piston primaire (10) pour un maître-cylindre de frein (14) ou un dispositif de transmission (26),
qui présente, sur un premier côté (10a), un premier renfoncement (20) dans lequel peut être insérée ou fixée au moins une section partielle d'un ressort primaire (12) d'un maître-cylindre de frein (14) équipé du piston primaire (10) ou coopérant avec celui-ci, qui est orientée vers le piston primaire (10),
un deuxième renfoncement (28) étant réalisé sur un deuxième côté (10b) du piston primaire (10) opposé au premier côté (10a), renfoncement dans lequel peuvent être insérées ou fixées au moins une section partielle d'une broche (22) d'un dispositif de transmission (26) équipé du piston primaire (10) ou coopérant avec celui-ci, qui est orientée vers le piston primaire (10), et simultanément au moins une section partielle d'un écrou (24) du dispositif de transmission (26) agencé sur la broche (22), qui est orientée vers le piston primaire (10),
**caractérisé en ce que**
le premier renfoncement (20) réalisé sur le premier côté (10a) du piston primaire (10) entoure au moins une section partielle du deuxième renfoncement (28), qui est orientée vers le premier côté (10a).

2. Piston primaire (10) selon la revendication 1, dans lequel au moins la section partielle de la broche (22) qui est orientée vers le piston primaire (10) peut être fixée ou est fixée dans le deuxième renfoncement (28), tandis que, simultanément, au moins la section partielle de l'écrou (24) déplacé dans un mouvement de rotation autour de la broche (22), qui est orientée vers le piston primaire (10), peut être insérée dans le deuxième renfoncement (28).

3. Piston primaire (10) selon la revendication 1, dans lequel au moins la section partielle de l'écrou (24) qui est orientée vers le piston primaire (10) peut être fixée ou est fixée dans le deuxième renfoncement (28), tandis que, simultanément, au moins la section partielle de la broche (22) déplacée dans un mouvement de rotation, qui est orientée vers le piston primaire (10), peut être insérée dans le deuxième renfoncement (28).

4. Piston primaire (10) selon la revendication 3, dans lequel au moins la section partielle de l'écrou (24) qui est orientée vers le piston primaire (10) est fixée dans le deuxième renfoncement (28), et l'écrou (24) est un écrou à recirculation de billes ou un écrou fileté.

5. Maître-cylindre de frein (14) pour un système de freinage à commande électrique, comprenant :
un piston primaire (10) selon l'une quelconque des revendications précédentes, et
le ressort primaire (12) coopérant avec le piston primaire (10),
la section partielle du ressort primaire (12) qui est orientée vers le piston primaire (10) étant fixée dans le premier renfoncement (20) du piston primaire (10).

6. Maître-cylindre de frein (14) selon la revendication 5, dans lequel un boîtier (40) du maître-cylindre de frein (14) est une pièce moulée en coquille.

7. Dispositif de transmission (26) pour un système de freinage à commande électrique, comprenant :
un piston primaire (10) selon l'une quelconque des revendications 1 à 4, et
la broche (22) et l'écrou (24) agencé sur la broche (22), qui coopèrent avec le piston primaire (10),
au moins la section partielle de la broche (22) qui est orientée vers le piston primaire (10) ou au moins la section partielle de l'écrou (24) qui est orientée vers le piston primaire (10) étant fixée dans le deuxième renfoncement (28) du piston primaire (10).

8. Dispositif de transmission (26) selon la revendication 7, dans lequel au moins la section partielle de la broche (22) qui est orientée vers le piston primaire (10) est fixée dans le deuxième renfoncement (28) du piston primaire (10), et dans lequel au moins un composant de support de couple (32) est fixé ou réalisé sur le piston primaire (10), au moyen duquel le piston primaire (10) est supporté sur une paroi intérieure d'un boîtier de transmission (34) du dispositif de transmission (26).

9. Dispositif de transmission (26) selon la revendication 7, dans lequel au moins la section partielle de l'écrou (24) qui est orientée vers le piston primaire (10) est fixée dans le deuxième renfoncement (28) du piston primaire (10), et dans lequel au moins un composant de support de couple (38) est fixé ou réalisé sur l'écrou (24), au moyen duquel l'écrou (24) est supporté sur la paroi intérieure du boîtier de transmission (34) du dispositif de transmission (26).

10. Générateur de pression de freinage pour un système de freinage à commande électrique, comprenant :
un piston primaire (10) selon l'une quelconque des revendications 1 à 4,
le maître-cylindre de frein (14) coopérant avec le piston primaire (10) et son ressort primaire (12), au moins la section partielle du ressort primaire (12) qui est orientée vers le piston primaire (10) étant fixée dans le premier renfoncement (20) du piston primaire (10), et
le dispositif de transmission (26) coopérant avec le piston primaire (10) avec sa broche (22) et son écrou (24) agencé sur la broche (22), au moins la section partielle de la broche (22) qui est orientée vers le piston primaire (10) ou au moins la section partielle de l'écrou (24) qui est orientée vers le piston primaire (10) étant fixée dans le deuxième renfoncement (28) du piston primaire (10).

11. Générateur de pression de freinage selon la revendication 10, dans lequel un boîtier (40) du maître-cylindre de frein (14) est une pièce moulée en coquille.

12. Générateur de pression de freinage selon la revendication 10 ou 11, dans lequel le boîtier (40) du maître-cylindre de frein (14) est vissé sur le boîtier de transmission (34) du dispositif de transmission (26).
